# EUROPEAN PATENT SPECIFICATION

(11) **EP 3 824 707 B1**
(45) Date of publication and mention of the grant of the patent: **30.03.2022**
(21) Application number: 19210486.7
(22) Date of filing: 20.11.2019
(51) Int. Cl.: A01B 1/00

(54) **GARDENING TOOL WITH SIMULATED CARBON FIBER PATTERN**
GARTENWERKZEUG MIT SIMULIERTEM KOHLEFASERMUSTER
OUTIL DE JARDINAGE COMPORTANT UN MOTIF DE FIBRE DE CARBONE SIMULÉ

(43) Date of publication of application: 26.05.2021
(73) Proprietor: Shin Tai Spurt Water Of The Garden Tools Co., Ltd., Chang-Hua Hsien (TW)
(72) Inventor: Chen, Chin-Yuan, Lu-Kang Town Chang-Hua Hsien (TW)
(74) Representative: Lang, Christian

(56) References cited:
- CN-U- 203 340 536
- US-A1- 2008 301 879
- Anonymous: "Higher-Level Laser Mold Texturing: MoldMaking Technology", , 6 February 2019 (2019-02-06), XP055677028, Retrieved from the Internet: URL:https://www.moldmakingtechnology.com/b log/post/higher-level-laser-mold-texturing [retrieved on 2020-03-17]

## Description

### BACKGROUND OF INVENTION

### Field of Invention

The present invention relates to a gardening tool, and more particularly to a gardening tool with simulated carbon fiber fabric pattern.

### Description of the Related Art

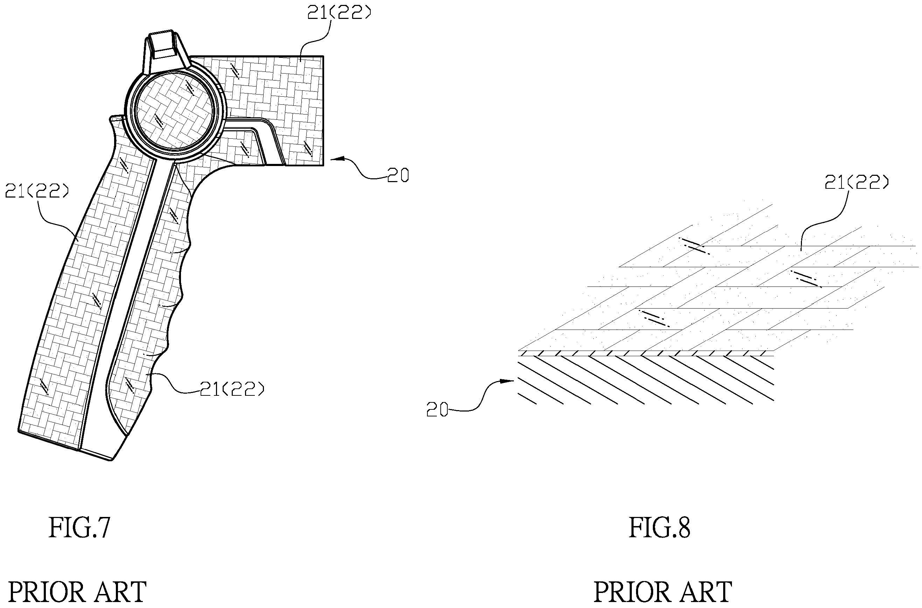

Conventionally, to provide a garden tool 20, such as water a spray gun, a sprinkler or one pair of secateurs, with a simulated carbon fiber pattern, the surface of the garden tool 20 is to be clad with a carbon fiber sheet 21 first of all. Then the carbon fiber sheet 21 is to be coated so that a transparent protective layer 22 is bonded to the carbon fiber sheet 21, as shown in FIG. 7.

However, the conventional structure as described above still has the following problems in practical applications: (i) The surface of the carbon fiber pattern needs to be processed multiple times to be smoothly formed, which causes high manufacturing costs for the gardening tool 20 and results in a more elaborate manufacturing process. (ii) The clad and coated gardening tool 20 cannot be recycled when being damaged, and the cladding and coating processes cause heavy pollutions. (iii) When the gardening tool 20 is finished with the coating, its surface becomes too smooth as shown in FIG. 8. Therefore, it is difficult to grip the gardening tool 20 in a wet environment. (iv) The protective layer 22 will become foggy and yellowish due to collision during use or solar radiation.

Therefore, it is desirable to provide a gardening tool with simulated carbon fiber pattern to mitigate and/or obviate the aforementioned problems.

Utility model publication CN 203340536 U and patent application publication US 2008/0301879 A1 disclose gardening tools having the features of the preamble of claim 1.

### SUMMARY OF THE INVENTION

An objective of present invention is to provide a gardening tool with simulated carbon fiber fabric pattern, which is capable of mitigating the above-mentioned problems.

In order to achieve the above-mentioned objective, a gardening tool having the features of claim 1 is provided. Further embodiments are subject-matter of the dependent claims.

The gardening tool according to the invention comprises a main portion and an operating portion. A simulated carbon fiber fabric pattern is disposed in at least one area of the main portion or the operating portion. The pattern is to be formed directly on a surface of the gardening tool by injection molding with a mold having such a pattern. Since the pattern is disposed on the gardening tool of a single-piece design, it is not necessary to clad the gardening tool with a simulated carbon fiber fabric sheet and then coat the simulated carbon fiber fabric sheet for protective purposes in a subsequent process. The pattern is structured in such a way that the surface of the gardening tool is formed with slightly varying elevation in accordance with the pattern, by what an increased tactile impression and an improved anti-slip property can be achieved.

Other objects, advantages, and novel features of invention will become more apparent from the following detailed description when taken in conjunction with the accompanying drawings.

### BRIEF DESCRIPTION of DRAWINGS

FIG. 1 is a perspective view of a gardening tool, shown according to a first preferred embodiment of the present invention.
FIG. 2 is a side view of the gardening tool of FIG. 1, shown according to the first preferred embodiment of the present invention.
FIG. 3 is a surface enlarged view of the gardening tool of FIG. 1, shown according to the first preferred embodiment of the present invention.
FIG. 4 is a perspective view of a gardening tool, shown according to a second preferred embodiment of the present invention.
FIG. 5 is a perspective view of a gardening tool, shown according to a third preferred embodiment of the present invention.
FIG. 6 is a perspective view of a gardening tool, shown according to a fourth preferred embodiment of the present invention.
FIG. 7 is a schematic drawing of a conventional gardening tool.
FIG. 8 is a surface enlarged view of the conventional gardening tool of FIG. 7.

### DETAILED DESCRIPTION OF THE PREFERRED EMBODIMENT

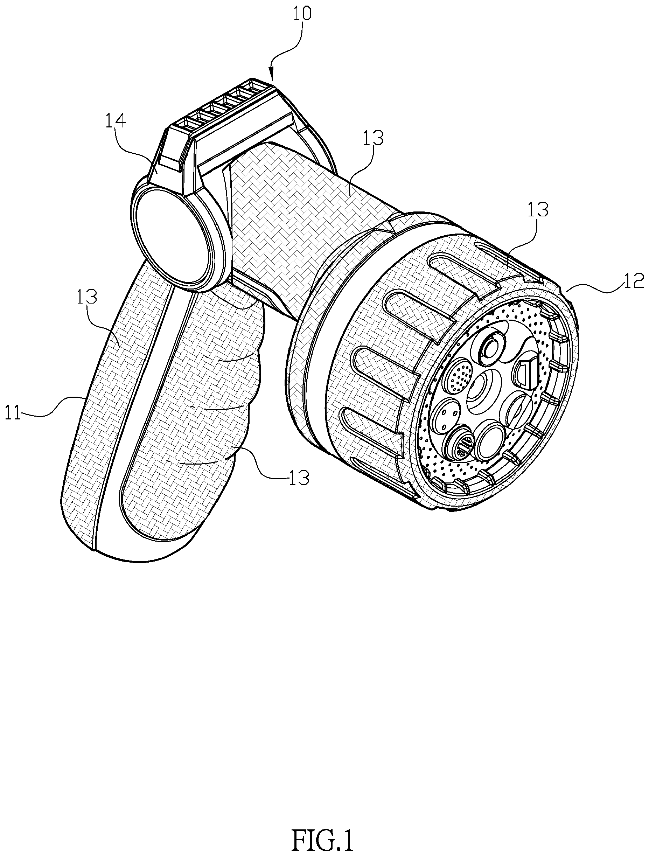

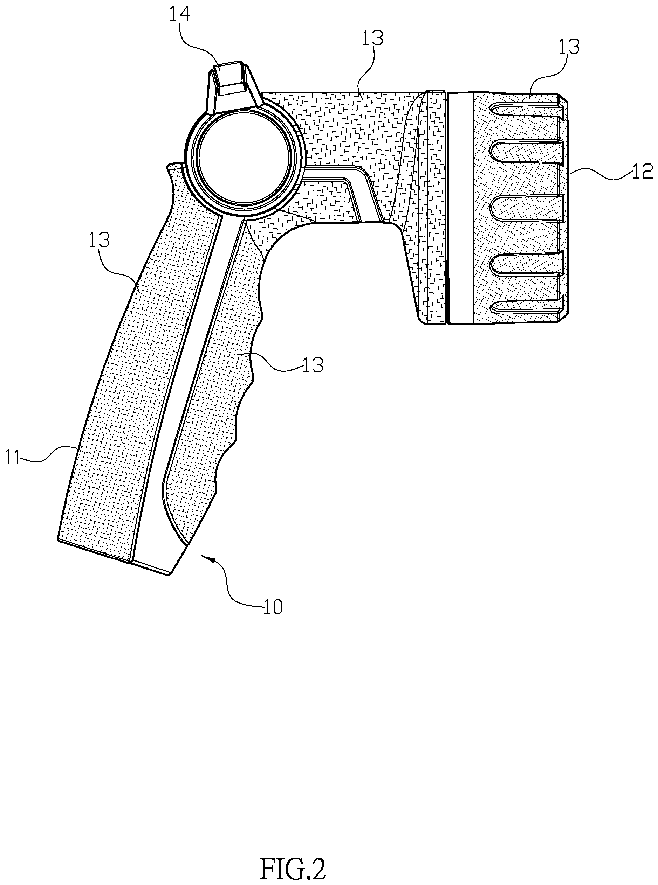

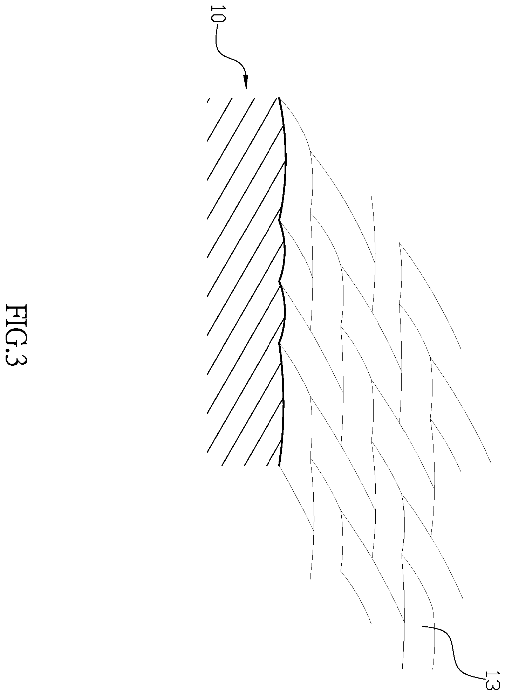

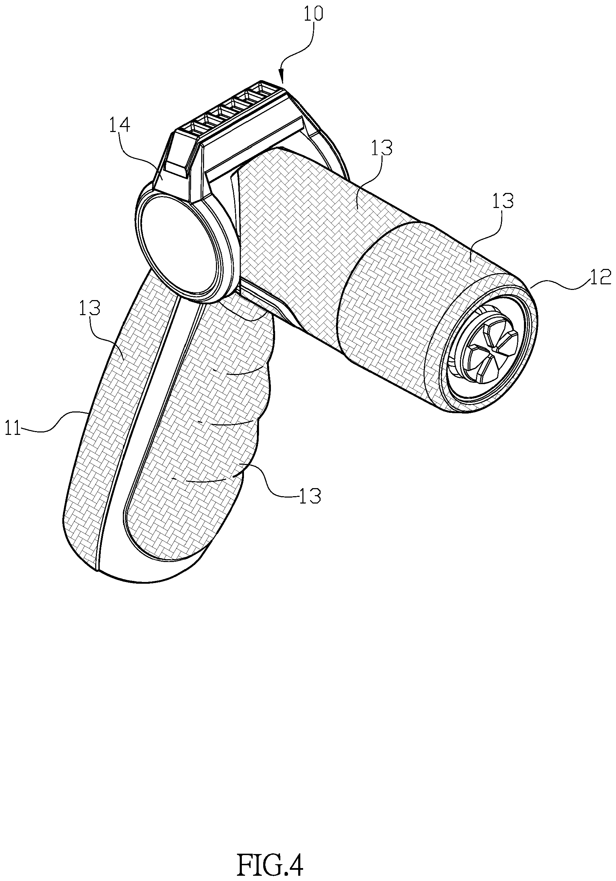

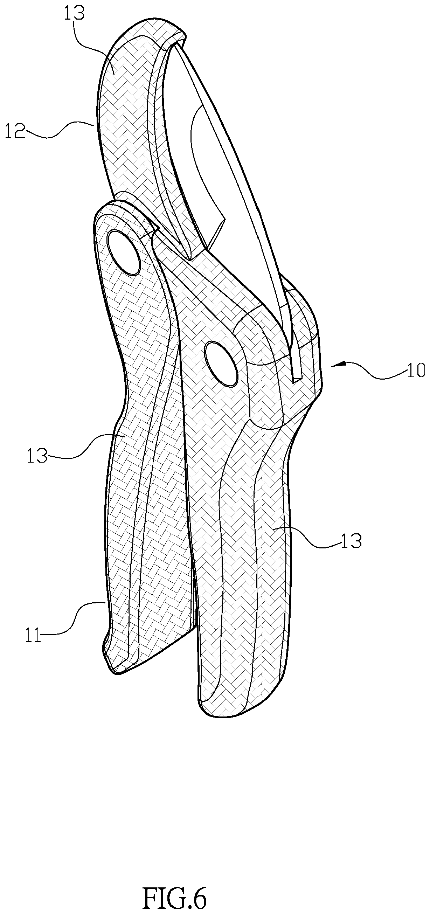

Please refer to FIGs. 1-6. A gardening tool 10 comprises a main portion 11 and an operating portion 12. A simulated carbon fiber fabric pattern 13 is disposed in at least one area of the main portion 11 or the operating portion 12. The pattern 13 is to be formed directly on a surface of the gardening tool 10 by injection molding with a mold having such a pattern 13. Since the pattern 13 is disposed on the gardening tool 10 of a single-piece design, it is not necessary to clad the gardening tool 10 with a simulated carbon fiber fabric sheet and then coat the simulated carbon fiber fabric sheet for protective purposes in a subsequent process. The pattern 13 is structured in such a way that the surface of the gardening tool 10 is formed with slightly varying elevation in accordance with the pattern 13 (as shown in FIG. 3), by what an increased tactile impression and an improved anti-slip property can be achieved when gripping the gardening tool 10.

According to the present invention, the simulated carbon fiber fabric pattern 13 is integrally formed only on the main portion 11 of the gardening tool 10 in one piece.

According to the present invention, the simulated carbon fiber fabric pattern 13 is integrally formed only on the operating portion 12 of the gardening tool 10 in one piece.

According to the present invention, the simulated carbon fiber fabric pattern 13 is integrally formed on both the main portion 11 and the operating portion 12 of the gardening tool 10 in one piece.

According to the present invention, the gardening tool 10 is a water spray gun, whereas the main portion 11 thereof is configured to be gripped and the operating portion 12 thereof is configured to spray water, as shown in FIGs. 1, 2,4.

According to the present invention, the gardening tool 10 is a finger-controlled water spray gun having a trigger handle 14.

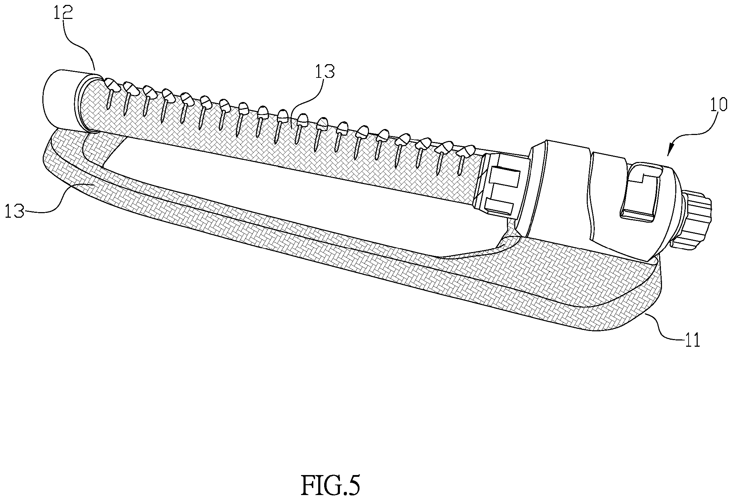

According to the present invention, the gardening tool 10 is a sprinkler, whereas the main portion 11 thereof is configured to be placed, for instance on the ground, and the operating portion 12 thereof is configured to spray water, as shown in FIG. 5.

According to the present invention, the gardening tool 10 is one pair of secateurs, whereas the main portion 11 thereof is configured to be gripped and the operating portion 12 thereof is provided with an anvil and configured to cut objects like branches.

According to the present invention, the mold has at least one cavity, on whose inner wall a plurality of notches is arranged according to the carbon fiber fabric pattern. In the manufacturing process, a plastic material is heated and melted by an injection molding machine and then injected into the mold in such a way that the cavity is completely filled with the melted plastic material. Finally, the melted plastic material is to be solidified in the cavity and in each of the notches as to form the gardening tool 10 having the simulated carbon fiber fabric pattern 13. Thus, the simulated carbon fiber fabric pattern 13 can be manufactured together with the gardening tool 10.

According to the present invention, the notches on the cavity are generated by a laser engraving machine.

The above-described gardening tool 10 with simulated carbon fiber fabric pattern has the following advantages: (i) The simulated carbon fiber fabric pattern 13 is manufactured together with the gardening tool 10, and the gardening tool 10 and pattern 13 can be integrally molded to skip cladding and coating processes, by what a reduction of manufacturing costs and a simplified manufacturing process of the gardening tool 10can be achieved; (ii) It is possible to form the simulated carbon fiber fabric pattern 13 on the gardening tool 10 in one piece without cladding the gardening tool 10 with a simulated carbon fiber fabric sheet and coating the simulated carbon fiber fabric sheet for protective purposes, so that the gardening tool 10 can be recycled when being damaged and the manufacturing process does not cause heavy pollutions; (iii) The pattern 13 is structured in such a way that the surface of the gardening tool 10 is formed with slightly varying elevation in accordance with the pattern 13, by what an increased tactile impression and an improved anti-slip property can be achieved when gripping the gardening tool 10; (iv) Since neither cladding nor coating is to be executed with the gardening tool 10, the surface of the gardening tool 10 won't become foggy and yellowish even though the gardening tool 10 is collided during use or exposed to solar radiation. Furthermore, by changing the composition and proportion of the plastic material, it is possible to realize a gardening tool 10 having a tactile texture of different hardness grades owing to the pattern 13.

## Claims

1. A gardening tool comprising
a main portion and an operating portion,
**characterised in that**
the gardening tool is provided with a simulated carbon fiber fabric pattern, wherein the simulated carbon fiber pattern is disposed in at least one area of the main portion or the operating portion and is to be formed directly on a surface of the gardening tool by injection molding with a mold having such a pattern.

2. The gardening tool with a simulated carbon fiber fabric pattern as claimed in claim 1, wherein the simulated carbon fiber pattern is integrally formed only on the main portion of the gardening tool in one piece.

3. The gardening tool with a simulated carbon fiber fabric pattern as claimed in claim 1, wherein the simulated carbon fiber pattern is integrally formed only on the operation portion of the gardening tool in one piece.

4. The gardening tool with a simulated carbon fiber fabric pattern as claimed in claim 1, wherein the simulated carbon fiber pattern is integrally formed on both the main portion and the operating portion of the gardening tool in one piece.

5. The gardening tool with a simulated carbon fiber fabric pattern as claimed in claim 1, wherein the gardening tool is a water spray gun, whereas the main portion thereof is configured to be gripped and the operating portion thereof is configured to spray water.

6. The gardening tool with a simulated carbon fiber fabric pattern as claimed in claim 1, wherein the gardening tool is a sprinkler, whereas the main portion thereof is configured to be placed, for instance on the ground, and the operating portion thereof is configured to spray water.

7. The gardening tool with a simulated carbon fiber fabric pattern as claimed in claim 1, wherein the gardening tool is one pair of secateurs, whereas the main portion thereof is configured to be gripped and the operating portion thereof is provided with an anvil and configured to cut objects like branches.

8. The gardening tool with a simulated carbon fiber fabric pattern as claimed in claim 1, wherein the mold has at least one cavity, on whose inner wall a plurality of notches is arranged according to the carbon fiber pattern.

## Patentansprüche

1. Gartengerät umfassend
einen Hauptabschnitt und einen Bedienabschnitt,
**dadurch gekennzeichnet dass**
das Gartengerät mit einem simulierten Kohlefasergewebemuster versehen ist, wobei das simulierte Kohlefasermuster in mindestens einem Bereich des Hauptabschnitts oder des Bedienabschnitts angeordnet ist und direkt auf einer Oberfläche des Gartengeräts durch Spritzgießen mit einer Form, die ein solches Muster aufweist, ausgebildet werden soll.

2. Gartengerät mit einem simulierten Kohlefasergewebemuster nach Anspruch 1, bei welchem das simulierte Kohlefasermuster nur auf dem Hauptabschnitt des Gartengeräts in einem Stück ausgebildet ist.

3. Gartengerät mit einem simulierten Kohlefasergewebemuster nach Anspruch 1, bei welchem das simulierte Kohlefasermuster nur auf dem Bedienabschnitt des Gartengeräts in einem Stück ausgebildet ist.

4. Gartengerät mit einem simulierten Kohlefasergewebemuster nach Anspruch 1, bei welchem das simulierte Kohlenfasermuster sowohl auf dem Hauptabschnitt als auch auf dem Bedienabschnitt des Gartengeräts in einem Stück ausgebildet ist.

5. Gartengerät mit einem simulierten Kohlefasergewebemuster nach Anspruch 1, bei welchem das Gartengerät eine Wassersprühpistole ist, deren Hauptabschnitt zum Greifen und deren Bedienabschnitt zum Sprühen von Wasser ausgebildet ist.

6. Gartengerät mit einem simulierten Kohlefasergewebemuster nach Anspruch 1, bei welchem das Gartengerät ein Sprinkler ist, während der Hauptabschnitt so konfiguriert ist, dass er zum Beispiel auf dem Boden platziert werden kann, und deren Bedienabschnitt zum Sprühen von Wasser konfiguriert ist.

7. Gartengerät mit einem simulierten Kohlefasergewebemuster nach Anspruch 1, bei welchem das Gartenwerkzeug eine Gartenschere ist, wobei der Hauptabschnitt davon so gestaltet ist, dass er gegriffen werden kann, und der Bedienabschnitt davon mit einem Amboss versehen ist und so gestaltet ist, dass er Objekte wie Äste schneiden kann.

8. Gartengerät mit einem simulierten Kohlefasergewebemuster nach Anspruch 1, bei welchem die Form mindestens einen Hohlraum aufweist, an dessen Innenwand eine Vielzahl von Kerben entsprechend dem Kohlefasermuster angeordnet ist.

## Revendications

1. Outil de jardinage comprenant
une partie principale et une partie d'actionnement,
**caractérisé en ce que**
l'outil de jardinage est pourvu d'un motif simulé de tissu de fibres de carbone, dans lequel le motif simulé de tissu de fibres de carbone est disposé dans au moins une zone de la partie principale ou de la partie d'actionnement et doit être formé directement sur une surface de l'outil de jardinage par moulage par injection avec un moule ayant un tel motif.

2. Outil de jardinage ayant un motif simulé de tissu de fibres de carbone tel que revendiqué dans la revendication 1, dans lequel le motif simulé de tissu de fibres de carbone est formé d'un seul tenant seulement sur la partie principale de l'outil de jardinage en une seule pièce.

3. Outil de jardinage ayant un motif simulé de tissu de fibres de carbone tel que revendiqué dans la revendication 1, dans lequel le motif simulé de tissu de fibres de carbone est formé d'un seul tenant seulement sur la partie d'actionnement de l'outil de jardinage en une seule pièce.

4. Outil de jardinage ayant un motif simulé de tissu de fibres de carbone tel que revendiqué dans la revendication 1, dans lequel le motif simulé de tissu de fibres de carbone est formé d'un seul tenant à la fois sur la partie principale et sur la partie d'actionnement de l'outil de jardinage en une seule pièce.

5. Outil de jardinage ayant un motif simulé de tissu de fibres de carbone tel que revendiqué dans la revendication 1, dans lequel l'outil de jardinage est un pistolet à eau tandis que la partie principale de celui-ci est configurée pour être saisie et que la partie d'actionnement de celui-ci est configurée pour pulvériser de l'eau.

6. Outil de jardinage ayant un motif simulé de tissu de fibres de carbone tel que revendiqué dans la revendication 1, dans lequel l'outil de jardinage est un arroseur tandis que la partie principale de celui-ci est configurée pour être placée, par exemple sur le sol, et que la partie d'actionnement de celui-ci est configurée pour pulvériser de l'eau.

7. Outil de jardinage ayant un motif simulé de tissu de fibres de carbone tel que revendiqué dans la revendication 1, dans lequel l'outil de jardinage est une paire de sécateurs tandis que la partie principale de celui-ci est configurée pour être saisie et que la partie d'actionnement de celui-ci est pourvue d'une enclume et est configurée pour couper des objets comme des branches.

8. Outil de jardinage ayant un motif simulé de tissu de fibres de carbone tel que revendiqué dans la revendication 1, dans lequel le moule présente au moins une cavité, sur une paroi interne de laquelle une pluralité d'encoches est agencée selon le motif de fibre de carbone.
